(19) **Europäisches Patentamt**

**European Patent Office**

**Office européen des brevets**

(11) **EP 0 764 373 B1**

(12) **EUROPÄISCHE PATENTSCHRIFT**

(45) Veröffentlichungstag und Bekanntmachung des Hinweises auf die Patenterteilung:
**10.05.2000 Patentblatt 2000/19**

(21) Anmeldenummer: **95920755.6**

(22) Anmeldetag: **03.06.1995**

(51) Int. Cl.$^7$: **H04B 7/26**

(86) Internationale Anmeldenummer:
**PCT/DE95/00729**

(87) Internationale Veröffentlichungsnummer:
**WO 95/34961 (21.12.1995 Gazette 1995/54)**

(54) **VERFAHREN ZUR TRÄGERFREQUENZSYNCHRONISATION IN EINEM MOBILFUNKNETZ**

METHOD OF SYNCHRONIZING CARRIER FREQUENCIES IN A MOBILE-RADIO NETWORK

PROCEDE DE SYNCHRONISATION DE FREQUENCES DE PORTEUSES DANS UN RESEAU RADIO-MOBILE

(84) Benannte Vertragsstaaten:
**CH DE ES FR GB IT LI PT SE**

(30) Priorität: **10.06.1994 DE 4420283**

(43) Veröffentlichungstag der Anmeldung:
**26.03.1997 Patentblatt 1997/13**

(73) Patentinhaber: **ROBERT BOSCH GMBH**
**70442 Stuttgart (DE)**

(72) Erfinder: **HAGMANNS, Franz-Josef**
**D-71522 Backnang (DE)**

(56) Entgegenhaltungen:
- **ICASSP-92: 1992 IEEE INTERNATIONAL CONFERENCE ON ACOUSTICS, SPEECH AND SIGNAL PROCESSING (CAT. NO.92CH3103-9), SAN FRANCISCO, CA, USA, 23-26 MARCH 1992, 23.März 1992 - 26.März 1992 ISBN 0-7803-0532-9, 1992, NEW YORK, NY, USA, IEEE, USA, Seiten iv677-iv680, TUISEL & KAMMEYER 'Carrier-recovery for multicarrier-transmission over mobile radio channels'**
- **IEEE TRANSACTIONS ON VEHICULAR TECHNOLOGY, AUG. 1993, USA, Bd. 42, Nr. 3, August 1993 ISSN 0018-9545, Seiten 302-313, WARNER W D ET AL 'OFDM/FM frame synchronization for mobile radio data communication'**

**Beschreibung**

Digitale Kommunikationssysteme erfordern in der Regel eine Synchronisation der Trägeroszillatoren im Sender und Empfänger. Dabei unterscheidet man

kohärenten Empfang: die Trägeroszillatoren im Sender und Empfänger sollen möglichst phasensynchron sein;

nichtkohärenten Empfang: die Trägeroszillatoren im Sender und Empfänger brauchen nicht phasensynchron zu sein, die Phasendifferenz zwischen beiden Trägeroszillatoren sollte aber nicht zu stark mit der Zeit variieren, d.h., die beiden Trägerozillatoren sollen möglichst frequenzsynchron sein.

Die vorliegende Erfindung bezieht sich auf den zweiten Fall, also die Trägerfrequenzsynchronisation zwischen Sender- und Empfängeroszillator. Es sei jedoch angemerkt, daß die vorliegende Erfindung auch für kohärente Übertragungsverfahren von Bedeutung sein kann; die Trägerphasensynchronisation wird vielfach in zwei Schritten ausgeführt: durch eine Trägerfrequenzsynchronisation wird zunächst versucht, die Trägerphasendifferenz zwischen Sender- und Empfängeroszillator möglichst konstant zu halten, um in einem zweiten Schritt schließlich die Trägerphasendifferenz zu eliminieren.

In vielen Kommunikationssystemen, insbesondere in Mobilfunksystemen wird die Trägerfrequenzsynchronisation durch spezielle Sendesignale unterstützt. Im von der GSM [1] spezifizierten Mobilfunksystem wird z.B. von den Basisstationen eine bezüglich der Frequenz konstante Sinusschwingung ständig oder zeitweise elektromagnetisch ausgestrahlt (im folgenden "Sinuston" genannt). Die Mobilstationen nutzen diesen Sinuston zur enmpängerseitigen Trägerfrequenzsynchronisation . Von den Mobilstationen wird dann zusätzlich verlangt, daß sie aus der synchronisierten Empfangsfrequenz ihre senderseitige Trägerfrequenz ableiten. Dadurch ist wiederum automatisch die Trägerfrequenzsynchronisation der Empfänger in den Basisstationen gesichert.

Dieses Verfahren hat zwei erwähnenswerte Nachteile.

1. Es ist bekannt siehe z.B. [2] ), daß Signale, die über terrestrische Funkkanäle übertragen werden, sogenannten Schwunderscheinungen (Fading) ausgesetzt sind. Diese wirken sich desto schlimmer aus, je schmalbandiger das übertragene Signal ist. Da ein Sinuston eine unendlich kleine Bandbreite hat, sind solche Signale maximal von diesen Schwunderscheinungen betroffen.

2. Die Sinustöne unterschiedlicher Basisstationen müssen unterschiedliche Frequenzen haben, da sie sich ansonsten durch destruktive Interferenz gegenseitig eliminieren könnten. Dieser Forderung steht aber der widersprüchliche Wunsch gegenüber, daß die Sinustöne aller Basisstationen die gleiche Frequenz haben sollten, damit sich für die Mobilstationen gewisse Diversity-Effekte bei der Trägerfrequenzsynchronisation ergeben.

Mit der vorliegenden Erfindung soll ein Ausweg aus der aufgezeigten Widersprüchlichkeit gefunden werden, so daß sich die Schwunderscheinungen nicht störend bemerkbar machen und nicht zu Synchronisationsausfällen bzw. -unterbrechungen in den Mobilstationen führen können.

In ICASSP-92: 1992 IEEE INTERNATIONAL CONFERENCE ON ACOUSTICS, SPEECH AND SIGNAL PROCESSING (CAT. NO: 92CH3103-9), SAN FRANCISCO, CA, USA, 23-26 MARCH 1992, 23. März 1992 - 26. März 1992, ISBN 0-7803-0532-9, 1992, NEW YORK, NY, USA, IEEE, USA, Seiten iv677-iv680, TUISEL & KAMMEYER 'Carrier-recovery for multicarrier-transmission over mobile radio channels', insbesondere Seite iv677, linke Spalte, Absatz 2, und Seite iv679, rechte Spalte, Absatz 2, wird vorgeschlagen, mehrere Trägersignale zu verwenden, um Schwunderscheinungen zu vermeiden.

Gemäß IEEE TRANSACTIONS ON VEHICULAR TECHNOLOGY, AUG. 1993, USA, Bd. 42, Nr. 3, August 1993 ISSN 0018-9545. Seiten 302-313, WARNER W D ET AL 'OFDM/FM frame synchronization for mobile radio data communication', insbesondere Seite 302, rechte Spalte, Absatz 1, und Seite 305, rechte Spalte, Absatz 2, werden mehrere Trägersignale (OFDM/FM) und für die Synchronisation mehrere Unterkanäle verwendet. Wie das jeweilige Synchronisationssignal aufgebaut ist, wird nicht angegeben.

Das erfindungsgemäße verfahren weist die vorteile auf, daß in den Basisstationen jeweils das gleiche Synchronisationssignal ausgestrahlt werden kann, was zur einheitlichen Anordnung und Ausrüstung derselben führt, und daß die Synchronisation der Mobilstationen gewährleistet ist, weil Auslöschungen des ausgesendeten Synchronisationssignals durch Schwunderscheinungen sich nicht störend bemerkbar machen können. Auch in den Mobilstationen können einheitliche, für gleiche Frequenzen ausgelegte Schaltungen verwendet werden.

Diese vorteile kommen dann zum Tragen, wenn die folgenden beiden Punkte erfüllt sind:

1. Die Synchronisationssignale sollen Breitbandsignale sein, so daß sie weniger von Schwundeffekten betroffen sind als reine Sinustöne.

2. Die Synchronisationssignale sollen zwar so unterschiedlich sein, daß sie sich nicht direkt auslöschen können, aber gleichzeitig in wesentlichen Merkmalen so übereinstimmend, daß alle möglichen Synchronisationssignale mit der gleichen Empfängerschaltung ausgewertet werden können; dies beinhaltet, daß mehrere Synchronisationssignale, die von unterschiedlichen Basisstationen ausgesendet werden und sich am Empfangsort überlagern, gleichzeitig ausgewertet werden können.

Die vorliegende Erfindung beschreibt verfahren zur durch spezielle Synchronisationsignale unterstützten Trägerfrequenzsynchronisation, das die weiter oben geschilderten Nachteile vermeidet und sich durch besondere Einfachheit auszeichnet. Die verwendeten Synchronisationsignale können jewils als Schar von 2L + 1 (L = 1, 2, 3, ... ) Sinustönen, deren Frequenzen $f_1$ relativ zu einer Mittenfrequenz $f_0$ (im folgenden auch als Trägerfrequenz bezeichnet) durch

$$f_l = \frac{l}{2L+1} W, \; l = 0, \pm 1, ..., \pm L$$

gegeben sind, interpretiert werden. W ist dabei die Bandbreite des für die Trägerfrequenzsynchronisation zur Verfügung stehenden Kanales. Da solche Sinustonscharen Breitbandsignale sind, sind sie nicht so stark von den Schwunderscheinungen betroffen wie ein einzelner Sinuston. Unterschiedliche Basisstationen erzeugen die Sinustöne mit den gleichen Frequenzen aber mit unterschiedlichen Phasen, d.h., ist $\varphi_{il}$ die Phase des l-ten Sinustones der i-ten Basisstation, dann gilt in der Regel

$$\varphi_{il} - \varphi_{ik} \neq \varphi_{jl} - \varphi_{jk}.$$

Eliminieren sich daher, wegen $\varphi_{il} = -\varphi_{jl}$, die jeweils l-ten Sinustöne der Basisstationen i und j, dann gilt in der Regel nicht $\varphi_{ik} = -\varphi_{jk}$, d.h. die jeweils k-ten Sinustöne eliminieren sich nicht.

Ferner wird weiter unten im Abschnitt "2. Algorithmus für die Trägerfrequenzschätzung" eine Einrichtung (Suchfilter) beschrieben, mit der die Trägerfrequenzsynchronisation effizient ausgeführt werden kann.

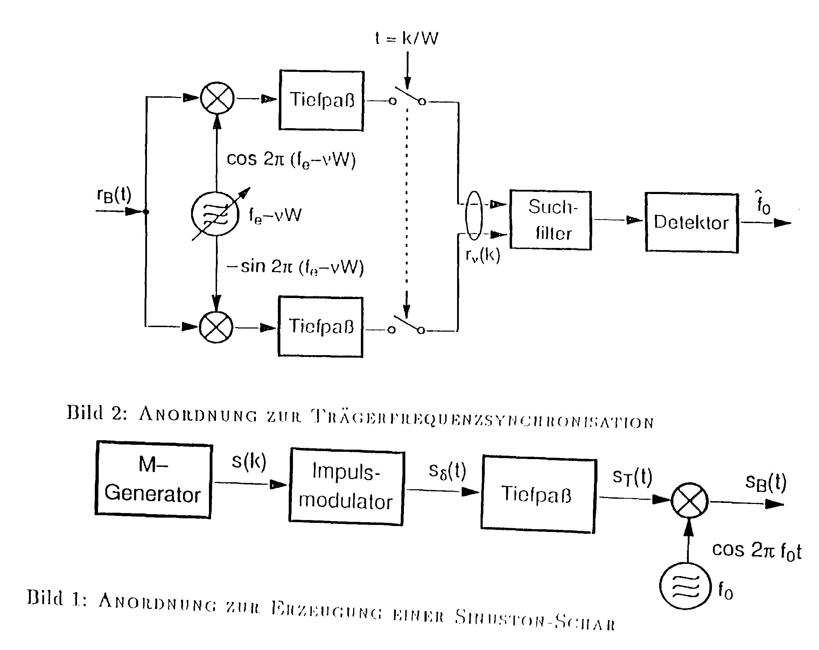

Es wird konstatiert, daß die im Bild 1 dargestellte Anordnung (in einer Basisstation) eine Schar von 2L + 1 Sinustönen bei den Frequenzen

$$f_l = f_0 + \frac{l}{2L+1} W, \; l = 0, \pm 1, ..., \pm L$$

erzeugt, wobei $f_0$ die Trägerfrequenz ist und der l-te Sinuston die Leistung

$$P_l = \begin{cases} \dfrac{1}{(2L+1)^2} P & , \;\; l = 0 \\[2mm] \dfrac{2L+2}{(2L+1)^2} P & , \;\; l \neq 0 \end{cases}$$

hat. P ist dabei die Gesamtleistung des Signales. Der M-Generator erzeugt eine maximalperiodische Folge der Periodenlänge (Anzahl der Takte) 2L + 1, wobei als Randbedingung

$$2L + 1 = 2^m - 1, \; m = 2, 3, 4, ...$$

gelten muß. Solche Folgen können durch rückgekoppelte m-stellige Schieberegister erzeugt werden, wobei die Rückkopplung durch ein primitives Polynom aus $GF(2^m)$ dargestellt werden kann (GF bedeutet Galois Feld, siehe[3]). Die maximalperiodische Folge sei hier so definiert, daß ihre Elemente nur die Werte +1 und -1 annehmen können. (Alternativ dazu könnte man sie auch so definieren, daß sie die Werte 0 und 1 annehmen.)

Die maximalperiodische Folge wird auf einen sogenannten Impulsmodulator gegeben, der zum Zeitpunkt

EP 0 764 373 B1

t=k/W einen Dirac-Stoß mit dem Gewicht s(k) erzeugt. Es gilt also mit der Dirac-Funktion $\delta$

$$s_\delta(t) = \sum_{k=-\infty}^{+\infty} s(k)\delta(t - k/W).$$

Diese Dirac-Stoß-Folge wird nun auf einen Tiefpaß mit der Stoßantwort $h_s(t)$ bzw. der Übertragungsfunktion

$$H_s(f) = \int_{-\infty}^{+\infty} h_s(t)e^{-j2\pi ft}dt$$

gegeben. Das Ausgangssignal dieses Tiefpasses lautet dann

$$s_T(t) = \sum_{k=-\infty}^{+\infty} s(k)h_s(t - k/W).$$

Idealerweise sollte der Tiefpaß bei den Frequenzen

$$f_l = \frac{l}{2L+1}W, \; l = 0,\pm 1,...,\pm L$$

den gleichen Verstärkungsfaktor haben. Ferner ist Linearphasigkeit erwünscht, d.h. die durch das Filter bei der Frequenz $f_l$ bedingte Phasenverschiebung $\psi_\ell$ sei eine lineare Funktion in $f_\ell$

$$\psi_l = cf_l;$$

dabei ist c irgendeine Konstante. Die dritte Bedingung an die Übertragungsfunktion des Filters sei

$$H_s(f) = 0, \; |f| \geq W/2.$$

Abweichungen von diesen Bedingungen können in gewissem Umfang toleriert werden. Das gefilterte Signal wird auf einen Träger mit der Frequenz $f_0$ moduliert, das Sendesignal

$$s_B(t) = s_T(t)\cos 2\pi f_0 t$$

ist jetzt eine Sinuston-Schar mit den Frequenzen

$$f_l = f_0 + \frac{l}{2L+1}W, \; l = 0,\pm 1,...,\pm L.$$

In einem Mobilfunk-Netz können die einzelnen Basisstationen die Synchronisationssignale nach dem gleichen Verfahren erzeugen, wobei jede Station jedoch ein anderes Rückkopplungspolynom zur Erzeugung der maximal-

4

periodischen Folgen verwendet. Die Zahl der möglichen Rückkopplungspolynome ist $e(2^m-1)/m$, wobei in die Zahl der Schieberegisterzellen und e die sogenannte Euler-Funktion [4] ist: sei z eine natürliche Zahl, dann ist e(z) die Anzahl der natürlichen Zahlen x mit $1 \leq x < z$, die teilerfremd zu z sind. Die Beschränktheit der Anzahl der möglichen Rückkopplungspolynome impliziert nicht die Beschränktheit der Gesamtzahl der Basisstationen. Basisstationen, die weit genug auseinanderliegen, können ohne weiteres das gleiche Rückkopplungspolynom verwenden.

Das gerade beschriebene Verfahren zur Erzeugung einer Sinustonschar ist nicht ganz optimal. Idealerweise sollten alle Sinustöne die gleiche Leistung haben, was hier nicht ganz erfüllt ist (für große L sind die Abweichungen jedoch vernachlässigbar). Ferner bedeutet die beschränkte Anzahl der unterschiedlichen Rückkopplungspolynome eine Beschränkung im Signaldesign.

Die Vorteile dieses Verfahrens liegen in der Einfachheit der Generierung der Synchronisationsignale (mit Hilfe einer maximal periodische Folge - die Sinustöne der Schar müssen nicht einzeln erzeugt werden) und in der Tatsache, daß die zeitdiskreten Signale im Basisband, s(k), eine konstante Amplitude haben. Dies führt dazu, daß die Sendesignale (ausgestrahlten Synchronisationssignale) auch eine näherungsweise konstante Amplitude haben, was für viele Anwendungen erwünscht ist.

Bild 2 zeigt eine Anordnung, mit deren Hilfe die Trägerfrequenz des Synchronisationssignales bestimmt werden kann. Das Empfangssignal $r_B(t)$ wird in der Mobilstation mit einem durchstimmbaren Quadraturdemodulator in das Easisband umgesetzt. $f_e$ sei die Oszillatorfrequenz zu Beginn des Synchronisationsvorganges. Während des Synchronisationsvorganaes wird diese laufend variiert; v ist dabei die auf die Signalbandbreite W normierte Verstimmung. Die beiden Quadraturkomponenten werden jeweils einem Tiefpaß zugeführt, an den die gleichen Anforderungen wie an den Sender-Tiefpaß zu stellen sind. Es wird angenommen, daß das Sendesignal $s_B(t)$ bei der Übertragung linear verzerrt und additiv durch weißes, gaußverteiltes Rauschen $n_B(t)$ gestört wird. Das Empfangssignal lautet daher

$$r_B(t) = h_c(t)^* s_B(t) + n_B(t).$$

Die linearen Verzerrungen werden also als Faltung des Sendesignales mit der Kanalstoßantwort $h_c(t)$ beschrieben.

Die Ausgangssignale der Tiefpässe werden jeweils mit der Rate W abgetaset; die Abtastwerte werden in einem digitalen Suchfilter verarbeitet. Die Stoßantwort dieses Suchfilters besteht aus N Abtastwerten irgendeiner maximalperiodischen Folge der Periodendauer $2L + 1$, d.h., ist s(k) eine maximalperiodische Folge der Periodendauer $2L + 1$, dann ist

$$h(k) = s(k), \ k = 0,...,N\text{-}1.$$

Man beachte, daß h(k) aus irgendeiner maximalperiodischen Folge abgeleitet werden darf, es muß nicht die im Sender verwendete sein. Bedingung ist nur, daß Sender und Empfänger eine maximalperiodische Folge der gleichen Periode verwenden. In einer Mobilfunkanwendung bedeutet dies aber, daß der Empfänger der Mobilstation automatisch die Synchronisationssignale aller empfangbaren Basisstationen auswertet. Da die aus der maximalperiodischen Folge abgeleiteten Kanalstoßantwortkoeffizienten nur die Werte +1 und -1 annehmen, kann das digitale Suchfilter multipliziererfrei realisiert werden.

Der Detektor bildet von $2L + 1$ aufeinanderfolgenden Ausgangswerten des Suchfilters die Betragsquadrate und summiert diese. Bei irgendeiner Verstimmung bzw. bei irgendeiner der vom Quadraturdemodulator eingestellten Frequenzen $f_0$ wird sich dabei ein Maximum ergeben. Diese Frequenz ist ein nahezu optimaler Maximum-Likelihood Schätzwert für die tatsächliche Trägerfrequenz.

Anzumerken ist, daß die im Bild 2 dargestellte Anordnung nicht nur dann anwendbar ist, wenn die Synchronisationssignale nach der im Bild 1 dargestellten Anordnung erzeugt werden, sondern immer dann, wenn das Synchronisationssignal eine Schar von Sinustönen mit den Frequenzen

$$f_l = f_0 + \frac{l}{2L+1} W, \ l = 0,\pm 1,...,\pm L,$$

ist, wobei die Anzahl der Sinustöne die Bedingung

$$2L + 1 = 2^m\text{-}1, \ m = 1,2,...$$

erfüllen muß.

Es folgt nun eine detaillierte Beschreibung der Erfindung und der Nachweis ihrer Funktionsfähigkeit.

1. Erzeugung einer Sinuston-Schar mit Hilfe von maximalperiodischen Folgen

Gegeben sei eine periodische Folge {s(k)}. Die Periodenlänge sei 2L + 1, d.h. s(k+2L+1) = s(k) . Der Abstand zwischen zwei Abtastwerten sei 1/W. Das Spektrum dieser Folge besteht daher ausschließlich aus Linien bei den Frequenzen

$$f_l = \frac{l}{2L+1} W, \quad l = 0, \pm 1, \ldots, \pm L,$$

mit den Amplituden

$$S_l = \frac{1}{2L+1} \sum_{k=0}^{2L} s(k) e^{-j2\pi \frac{kl}{2L+1}}.$$

Die Leistung der *l*-ten Spektrallinie ist daher

$$P_l = |S_l|^2 = \frac{1}{(2L+1)^2} \sum_{k=0}^{2L} \sum_{k'=0}^{2L} s(k) s^*(k') e^{-j2\pi \frac{k-k'}{2L+1} l}$$

$$= \frac{1}{(2L+1)^2} \sum_{k=0}^{2L} \sum_{k'=0}^{2L} s(k) s^*(k-k') e^{-j2\pi \frac{k'l}{2L+1}}$$

$$= \frac{1}{(2L+1)^2} \sum_{k'=0}^{2L} \phi_{ss}(k') e^{-j2\pi \frac{k'l}{2L+1}},$$

wobei

$$\phi_{ss}(k') = \sum_{k=0}^{2L} s(k) s^*(k-k').$$

Wählt man für {s(k)} eine maximalperiodische Folge, dann ist [4]

$$\phi_{ss}(k') = (2L+2)\delta(k')-1.$$

Es folgt

$$P_l = \frac{1}{(2L+1)^2} \sum_{k=0}^{2L} [(2L+2)\delta(k) - 1] e^{-j2\pi\frac{kl}{2L+1}}$$

$$= \frac{2L+2}{(2L+1)^2} - \frac{1}{(2L+1)^2} \sum_{k=0}^{2L} e^{-j2\pi\frac{kl}{2L+1}}$$

$$= \begin{cases} \dfrac{1}{(2L+1)^2} & , \quad l = 0 \\[2ex] \dfrac{2L+2}{(2L+1)^2} & , \quad l \neq 0 \end{cases}$$

Es gilt also: ist {s(k)} eine maximalperiodische Folge und 2L + 1 die Periodenlänge, dann besitzt diese Folge 2L Spektrallinien der gleichen Leistung. Nur die Leistung der Linie bei f=0 ist um den Faktor 2L + 2 kleiner.

2. Algorithmus für die Trägerfrequenzschätzung

In diesem Abschnitt wird die Funktionsfähigkeit der im Bild 2 dargestellten Anordnung nachgewiesen. Dazu wird zunächst der optimale ML-Schätzalgorithmus hergeleitet, der im wesentlichen auf Ideen von Rife und Boorstyn [5], [6] basiert. Anschließend wird gezeigt, wie dieser Algorithmus besonders günstig als Suchfilter strukturiert werden kann. Zunächst sei $f_e$ die vom Oszillator des Quadraturdemodulators eingestellte Empfangsfrequenz. Das digitale Suchfilter sieht dann eine Signalabtastfolge der Form

$$r(k) = \sum_{l=-L}^{+L} a(l) e^{j2\pi\frac{kl}{2L+1}} e^{j2\pi\Delta f k} + n(k).$$

Darin ist $\Delta f$ die auf die Signalbandbreite $W$ normierte Differenz zwischen den Oszillatoren in Empfänger und Sender,

$$\Delta f = \frac{f_e - f_0}{W},$$

und a(l) die (komplexe) Amplitude des l-ten Sinustones. Man beachte, daß diese nicht nur von der Signalerzeugung sondern auch von der Kanalstoßantwort und der Zeitverzögerung des Signales bei der Übertragung abhängig und damit dem Empfänger unbekannt ist. n(k) symbolisiert weißes gaußverteiltes Rauschen.

Als Synchronisationsansatz kann man einen Maximum-Likelihood (ML) Ansatz zur gleichzeitigen Schätzung von $\Delta f$ und allen a(l) verwenden. Sei $\hat{v}$ der ML-Schätzwert für $\Delta f$ und $\hat{a}(l)$ der ML-Schätzwert für a(l), dann besagt die ML-Regel, daß

$$\sum_{k=0}^{N-1} \left| r(k) - \sum_{l=-L}^{+L} \alpha(l) e^{j2\pi\frac{kl}{2L+1}} e^{j2\pi\nu k} \right|^2$$

für $a(l) = \hat{a}(l)$ und $v = \hat{v}$ minimal bzw.

$$\sum_{k=0}^{N-1} \left[ \mathrm{Re} \left\{ r(k) \sum_{l=-L}^{+L} \alpha^*(l) e^{-j2\pi\frac{kl}{2L+1}} e^{-j2\pi\nu k} \right\} - \frac{1}{2} \left| \sum_{l=-L}^{+L} \alpha(l) e^{j2\pi\frac{kl}{2L+1}} \right|^2 \right] \qquad (1)$$

für die gleiche Wahl maximal ist. Dabei wurde angenommen, daß insgesamt $N$ Abstastwerte des Empfangssignales $r(k)$ ausgewertet werden. Der zweite Term ist

$$\frac{1}{2} \sum_{k=0}^{N-1} \left| \sum_{l=-L}^{+L} \alpha(l) e^{j2\pi\frac{kl}{2L+1}} \right|^2 = \frac{1}{2} \sum_{k=0}^{N-1} \sum_{l=-L}^{+L} \sum_{l'=-L}^{+L} \alpha(l)\alpha^*(l') e^{j2\pi k\frac{l-l'}{2L+1}}$$

$$= \frac{1}{2} \sum_{l=-L}^{+L} \sum_{l'=-L}^{+L} \alpha(l)\alpha^*(l') \sum_{k=0}^{N-1} e^{j2\pi k\frac{l-l'}{2L+1}}.$$

Nimmt man an, daß N ein ganzes Vielfaches von 2L + 1 ist, dann ist

$$\sum_{k=0}^{N-1} e^{j2\pi k\frac{l-l'}{2L+1}} = N\delta(l - l').$$

Es folgt dann

$$\frac{1}{2} \sum_{k=0}^{N-1} \left| \sum_{l=-L}^{+L} \alpha(l) e^{j2\pi\frac{kl}{2L+1}} \right|^2 = \frac{N}{2} \sum_{l=-L}^{+L} |\alpha(l)|^2.$$

Aus (1) wird somit

$$\mathrm{Re}\left\{\sum_{k=0}^{N-1} r(k) \sum_{l=-L}^{+L} \alpha^*(l) e^{-j2\pi \frac{kl}{2L+1}} e^{-j2\pi \nu k}\right\} - \frac{N}{2}\sum_{l=-L}^{+L}|\alpha(l)|^2. \quad (2)$$

Verwendet man die Abkürzung

$$\lambda(f) = \sum_{k=0}^{N-1} r(k) e^{-j2\pi f k}$$

($\lambda(f)$ ist die Fourier-Transformierte des abgetasteten Eingangssignales an der Stelle $f$), dann läßt sich (2) schreiben als

$$\sum_{l=-L}^{+L} \mathrm{Re}\left\{\alpha^*(l)\lambda\left(\frac{l}{2L+1} + \nu\right)\right\} - \frac{N}{2}|\alpha(l)|^2. \quad (3)$$

Durch einfache Variationsrechnung kann man jetzt zeigen, daß für die Maximalstellen dieses Ausdruckes die Beziehung

$$N\hat{a}(l) = \lambda\left(\frac{l}{2L} + \hat{\nu}\right)$$

gilt. Verwendet man diese Beziehung in (3), dann erkennt man, daß sich das Maximum des Ausdruckes (3)

$$\sum_{l=-L}^{+L}\left|\lambda\left(\frac{l}{2L+1} + \hat{\nu}\right)\right|^2 = \sum_{l=-L}^{+L}\left|\sum_{k=0}^{N-1} r(k) e^{-j2\pi \hat{\nu} k} e^{-j2\pi \frac{kl}{2L+1}}\right|^2$$

$$= \sum_{l=-L}^{+L}\left|\sum_{k=0}^{N-1} r_{\hat{\nu}}(k) e^{-j2\pi \frac{kl}{2L+1}}\right|^2$$

schreiben läßt. Dabei ist allgemein

$$r_\nu(k) = r(k) e^{-j2\pi \nu k}.$$

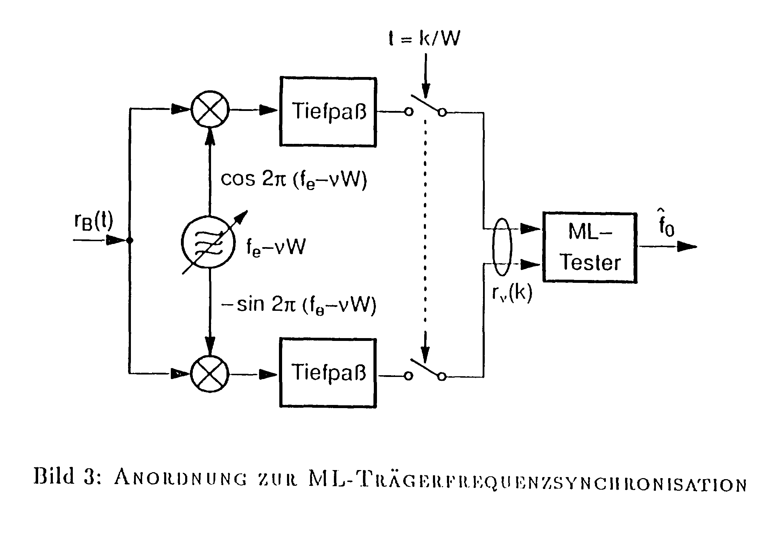

$r_\nu(k)$ kann z.B. erzeugt werden, indem man den Trägeroszillator um -$vW$ verstimmt. Der gerade hergeleitete ML-Algorithmus zur Bestimmung eines geeigneten Schätzwertes $\hat{\nu}$ für den Trägerfrequenzoffset $\Delta f$ kann man durch die im Bild 3 dargestellte Anordnung realisieren. Die Anordnung entspricht, bis auf die Anteile nach der Abtastung, der Anordnung im Bild 2. Der Oszillator des Quadraturdemodulators wird um -$vW$ verstimmt; das abgetastete Empfangssignal ist dann $r_v(k)$. Der ML-Tester berechnet daraus den Wert

$$\sum_{l=-L}^{+L}\left|\sum_{k=0}^{N-1}r_\nu(k)e^{-j2\pi\frac{kl}{2L+1}}\right|^2.$$

Die Verstimmung, für die sich dabei der größte Wert ergibt, entspricht dann dem optimalen Schätzwert für den Trägerfrequenzfehler, d.h. bei gerade dieser Verstimmung ist der Empfangsoszillator optimal im Sinne der ML-Regel auf die Trägerfrequenz synchronisiert.

Zum endgültigen Nachweis der Funktionsfähigkeit der im Bild 2 dargestellten Anordnung bleibt nur noch zu zeigen, daß der relativ komplizierte Block ML-Test durch das im Abschnitt 2 beschriebene Suchfilter ersetzt werden kann. Die Werte

$$\lambda\left(\frac{l}{2L+1}+\nu\right)=\sum_{k=0}^{N-1}r_\nu(k)e^{-j2\pi\frac{kl}{2L+1}}, \qquad l=-L,\dots,+L,$$

kann man erzeugen, indem man $r_v(k)$ auf eine Bank von $2L+1$ Filtern mit den Stoßantworten

$$h_l(-k)=e^{j2\pi\frac{kl}{2L+1}}, \, k=0,\dots,N\text{-}1,$$

gibt und den Ausgangswert zur Zeit $k=0$ nimmt. $g_l(n)$ sei das Ausgangssignal des $l$-ten Filters zur Zeit $n$, dann ist

$$g_l(0)=\lambda\left(\frac{l}{2L+1}+v\right).$$

Der ML-Tester berechnet also

$$\sum_{l=-L}^{+L}|g_l(0)|^2,$$

d.h. er quadriert die Ausgangswerte der $2L+1$ Filter zur Zeit 0 und summiert diese. Ist $N$ groß verglichen mit $2L+1$, dann gilt in guter Genauigkeit für n = 0,...,$2L$

$$g_l(n) = \sum_{k=0}^{N-1} r_\nu(n+k)e^{-j2\pi\frac{kl}{2L+1}}$$

$$\approx \sum_{k=0}^{N-1} r_\nu(k)e^{-j2\pi\frac{k-n}{2L+1}l}$$

$$= e^{j2\pi\frac{nl}{2L+1}} \sum_{k=0}^{N-1} r_\nu(k)e^{-j2\pi\frac{kl}{2L+1}}$$

$$= e^{j2\pi\frac{nl}{2L+1}} g_l(0).$$

Damit ist

$$\sum_{k=0}^{2L}\left|\sum_{l=-L}^{+L} g_l(k)\right|^2 = \sum_{k=0}^{2L}\sum_{l=-L}^{+L}\sum_{l'=-L}^{+L} g_l(k)g_{l'}^*(k)$$

$$\approx \sum_{k=0}^{2L}\sum_{l=-L}^{+L}\sum_{l'=-L}^{+L} g_l(0)e^{j2\pi\frac{kl}{2L+1}} g_{l'}^*(0)e^{-j2\pi\frac{kl'}{2L+1}}$$

$$= \sum_{l=-L}^{+L}\sum_{l'=-L}^{+L} g_l(0)g_{l'}^*(0)\sum_{k=0}^{2L} e^{j2\pi\frac{l-l'}{2L+1}k}$$

$$= (2L+1)\sum_{l=-L}^{+L}\sum_{l'=-L}^{+L} g_l(0)g_{l'}^*(0)\delta(l-l')$$

$$= (2L+1)\sum_{l=-L}^{+L} |g_l(0)|^2.$$

Diese Umformung belegt, daß man statt der obigen Filterbank ein einfaches Filter mit der Stoßantwort

$$h(k) = \sum_{l=-L}^{+L} h_l(k) = \sum_{l=-L}^{+L} e^{-j2\pi\frac{kl}{2L+1}}, \qquad k = 0,\ldots,-N+1,$$

verwenden darf. Dann interessiert allerdings nicht nur der Filterausgangswert zur Zeit k=0, sondern 2L + 1 aufeinanderfolgende Filterausgangswerte. Diese werden quadriert und aufsummiert.

Da die Phasen der einzelnen Teilschwingungen keine Rolle spielen, benötigt man einfach ein Filter, dessen Übertragungsfunktion aus 2L + 1 gleich hohen Linien an den Stellen f=lW/(2L+1) , l=-L ,...,+L besteht. Die Stoßantwort eines solchen Filters kann in guter Näherung realisiert werden, indem man N Abtastwerte einer maximalperiodischen Folge der Periodenlänge 2L + 1 nimmt. Wie im letzten Abschnitt gezeigt, weist ein Filter mit einer solchen Stoßantwort, ausgenommen an der Stelle f=0, die gewünschte Übertragungsfunktion auf.

Literatur

[1] CEPT/CCH/GSM Recommendation 05.02: Multiplexing and Multiple Access on the Radio Path, 1988.

[2] J.G. Proakis, Digital Communications, McGraw-Hill 1983.

[3] W.W. Peterson, Error-Correction Codes, MIT Press, 1972.

[4] J.K. Holmes, Coherent Spread Spectrum Systems, John Wiley

[5] D.C. Rife, R.R. Boorstyn, "Single-Tone Parameter Estimation from Discrete-Time Observations", IEEE Transactions on Information Theory, vol. IT-20, pp. 591-598, 1974.

[6] D.C. Rife, R.R. Boorstyn, "Multiple Tone Parameter Estimation from Discrete-Time Observations", Bell System Technical Journal, vol. 55, pp. 1389-1410, Nov. 1976. John Wiley & Sons, 1982.

**Patentansprüche**

1. Verfahren, bei dem von Basisstationen eines Mobilfunknetzes ein Synchronisationssignal ausgestrahlt wird, das von Mobilstationen zur Trägerfrequenzsynchronisation ihrer Empfänger benutzt wird, dadurch gekennzeichnet,

   daß sich das Synchronisationssignal aus einer Schar von $2^m - 1$ gleichzeitig ausgesendeten Sinusschwingungen unterschiedlicher Frequenzen zusammensetzt mit m = 2, 3, 4, ..., wobei die von unterschiedlichen Basisstationen gleichzeitig ausgesendeten Scharen jeweils die gleichen Sinusschwingungen, jedoch mit unterschiedlichen Phasenlagen enthalten und die Sinusschwingungen näherungsweise die selbe Leistung haben und das Synchronisationssignal näherungsweise eine konstante Amplitude hat.

2. Verfahren nach Anspruch 1, dadurch gekennzeichnet,

   daß die Mobilstationen jeweils ein Suchfilter aufweisen, mit dessen Hilfe mindestens eine der gesendeten Sinusschwingungen auffindbar und detektierbar ist.

3. Verfahren nach einem der vorangehenden Ansprüche, dadurch gekennzeichnet,

   daß das Empfangssignal mittels eines Quadraturdemodulators in das Basisband transformiert, abgetastet und dem Suchfilter zugeführt wird,
   daß die Stoßantwort des Suchfilters eine beliebige maximalperiodische Folge der Länge 2L + 1 ist mit L = 1, 2, 3, ...,
   daß das Ausgangssignal des Suchfilters einem Detektor zugeführt wird, der 2L + 1 Signalwerte quadriert und aufsummiert und der diejenige Frequenz als Synchronisationsfrequenz feststellt, bei der die Summe ein Maximum ist.

4. Verfahren nach einem der vorangehenden Ansprüche, dadurch gekennzeichnet, daß die Frequenzen der Sinusschwingungen äquidistant sind.

5. Verfahren nach Anspruch 4, dadurch gekennzeichnet, daß die Sinusschwingungen die Frequenzen $f_l = f_0 + W \cdot l/(2L + 1)$ aufweisen mit $l = 0, \pm 1, ...., \pm L$ und mit L = 1, 2, 3, ...., worin W die Bandbreite des für die Trägerfrequenzsynchronisation zur Verfügung stehenden Kanals und $f_0$ die Mittenfrequenz dieses Kanals ist.

6. Verfahren nach Anspruch 5, dadurch gekennzeichnet, daß die Schar der Sinusschwingungen durch Modulation einer Schwingung der genannten Mittenfrequenz $f_0$ erzeugt wird.

7. Verfahren nach einem der vorhergehenden Ansprüche, dadurch gekennzeichnet, daß in unterschiedlichen Basisstationen die Scharen mit derselben Mittenfrequenz f0 jeweils durch eine maximalperiodische Folge der einheitlichen Periodenlänge 2L + 1 mit L = 1, 2, 3, ..., jedoch mit unterschiedlichen Sequenzen gebildet werden.

## Claims

1. Method in which a synchronization signal which is used by mobile stations for the carrier frequency synchronization of their receivers is emitted by base stations of a mobile radio network, characterized in that the synchronization signal is composed of a family of $2^m-1$ simultaneously transmitted sinusoidal oscillations of different frequencies where m = 2, 3, 4, ..., the families simultaneously transmitted by different base stations respectively containing the same sinusoidal oscillations, but with different phase angles, and the sinusoidal oscillations having approximately the same power and the synchronization signal having approximately a constant amplitude.

2. Method according to Claim 1, characterized in that the mobile stations each have a search filter with the aid of which at least one of the transmitted sinusoidal oscillations can be found and detected.

3. Method according to one of the preceding claims, characterized in that by means of a quadrature demodulator the received signal is transformed into the baseband, sampled and fed to the search filter, in that the unit pulse response of the search filter is an arbitrary maximum-period sequence of length 2L + 1, where L = 1, 2, 3, ..., and in that the output signal of the search filter is fed to a detector which squares and sums the 2L + 1 signal values, and which determines as synchronization frequency that frequency at which the sum is a maximum.

4. Method according to one of the preceding claims, characterized in that the frequencies of the sinusoidal oscillations are equidistant.

5. Method according to Claim 4, characterized in that the sinusoidal oscillations have the frequencies $f_1 = f_0 + W \cdot l/(2L + 1)$, where 1 = 0, ± 1, ..., ± L and where L = 1, 2, 3, ..., in which W is the bandwidth of the channel available for carrier frequency synchronization, and $f_0$ is the centre frequency of this channel.

6. Method according to Claim 5, characterized in that the family of the sinusoidal oscillations is generated by modulation of an oscillation of the said centre frequency $f_0$.

7. Method according to one of the preceding claims, characterized in that in different base stations the families with the same centre frequency $f_0$ are formed respectively by a maximum-periodic sequence of standard period length 2L + 1, where L = 1, 2, 3, ..., but with different sequences.

## Revendications

1. Procédé selon lequel des stations de base d'un réseau radio mobile émettent un signal de synchronisation utilisé par des stations mobiles pour synchroniser la fréquence de la porteuse de leur récepteur, caractérisé en ce que

   • le signal de synchronisation se compose d'un groupage d'oscillations sinusoïdales de fréquences différentes émises simultanément, cet ensemble comprenant $(2^m - 1)$ oscillations avec m = 2, 3, 4...,
   • les groupages émis simultanément par les stations de base différentes contiennent chaque fois les mêmes oscillations sinusoïdales mais avec des phases différentes, les oscillations sinusoïdales ont sensiblement la même puissance et le signal de synchronisation présente approximativement une amplitude constante.

2. Procédé selon la revendication 1,
   caractérisé en ce que
   les stations mobiles comportent chaque fois un filtre de recherche à l'aide duquel, on trouve et on détecte au moins l'une des oscillations sinusoïdales émises.

3. Procédé selon l'une quelconque des revendications précédentes,
   caractérisé en ce que

   • le signal de réception est transformé par un modulateur en quadrature vers la bande de base, puis il est détecté et appliqué au filtre de recherche, et
   • la réponse impulsionnelle du filtre de recherche est une suite périodique maximale quelconque de longueur (2L + 1) avec L = 1, 2, 3, ...,
   • le signal émis par le filtre de recherche étant appliqué à un détecteur qui met en quadrature et additionne les (2L + 1) valeurs des signaux, et détermine la fréquence respective comme fréquence de synchronisation pour laquelle la somme correspond à un maximum.

4. Procédé selon l'une quelconque des revendications précédentes, caractérisé en ce que les fréquences des oscillations sinusoïdales sont équidistantes.

5. Procédé selon la revendication 4, caractérisé en ce que les oscillations sinusoïdales ont des fréquences $f_1 = f_0 + W \cdot l/(2L + 1)$ avec $1 = 0, \pm 1, ...., \pm L$ et $L = 1, 2, 3,...,$ et W représente la largeur de bande du canal disponible pour la synchronisation de la fréquence porteuse et fa représente la fréquence centrale de ce canal.

6. Procédé selon la revendication 1, caractérisé en ce que le groupage des oscillations sinusoïdales est généré par modulation d'une oscillation correspondant à la fréquence centrale $f_0$ ci-dessus.

7. Procédé selon l'une quelconque des revendications précédentes, caractérisé en ce que dans les différentes stations de base, les groupages ayant la même fréquence centrale $f_0$ sont formés chaque fois par une succession périodique maximale des longueurs de période unitaires $(2L + 1)$ avec $L = 1, 2, 3,...,$ mais avec des séquences différentes.

Bild 2: ANORDNUNG ZUR TRÄGERFREQUENZSYNCHRONISATION

Bild 1: ANORDNUNG ZUR ERZEUGUNG EINER SINUSTON-SCHAR

t = k/W

Tiefpaß

cos 2π (f$_e$−νW)

r$_B$(t)

f$_e$−νW

−sin 2π (f$_e$−νW)

Tiefpaß

ML−Tester

$\hat{f}_0$

r$_\nu$(k)

Bild 3: ANORDNUNG ZUR ML-TRÄGERFREQUENZSYNCHRONISATION